# FASCICULE DE BREVET EUROPEEN

(11) **EP 0 402 195 B1**
(45) Date de publication et mention de la délivrance du brevet: **23.06.1993**
(21) Numéro de dépôt: 90401413.1
(22) Date de dépôt: 28.05.1990
(51) Int. Cl.: B60N 2/36, B60R 22/26

(54) **Dispositif d'arrimage démontable d'une banquette arrière pour véhicule automobile**
Lösbare Befestigungsvorrichtung für einen Rücksitz eines Kraftfahrzeuges
Demountable fastening device for the rear seat of a motor vehicle

(30) Priorité: 06.06.1989 FR 8907471
(43) Date de publication de la demande: 12.12.1990
(73) Titulaire: AUTOMOBILES PEUGEOT, 75116 Paris (FR); AUTOMOBILES CITROEN, 92200 Neuilly-sur-Seine (FR)
(72) Inventeur: Lalanne, André, F-93200 Saint Denis (FR)
(74) Mandataire: Durand, Yves Armand Louis

(56) Documents cités:
- EP-A- 0 015 179
- DE-A- 3 507 894
- US-A- 4 218 074

## Description

La présente invention a essentiellement pour objet un dispositif d'arrimage démontable d'une banquette arrière de véhicule automobile.

Sur les véhicules du type "familiale" équipés d'une banquette trois places à assise surélevée par rapport au plancher du véhicule, on sait que, lorsqu'on veut augmenter le volume du coffre par basculement et repliement de la banquette, on rencontre le problème des ceintures de sécurité qui sont généralement fixées sur le plancher du véhicule.

Il est par conséquent utile d'intégrer les boucles de ceinture à l'assise de la banquette, mais ceci implique une rigidité très importante de l'armature pour que celle-ci résiste aux efforts des ceintures de sécurité en cas de chocs ou d'accidents, conformément aux normes en vigueur.

Le document EP-A-0 015 179 décrit un dispositif d'arrimage selon le préambule de la revendication 1. Toutefois le siège décrit dans ce document n'est pas surélevé mais directement fixé sur le plancher du véhicule.

On connait par ailleurs d'après le document DE-A-3 507 894 un siège avant individuel rabattable utilisant un support repliable et verrouillable sur le plancher'du véhicule, lors de la mise en service du siège.

La présente invention propose un système particulièrement simple, peu coûteux et qui peut être rapporté sur une assise de banquette arrière classique, du type surélevée par rapport au plancher du véhicule, ce système permettant avantageusement un arrimage mécaniquement fiable et résistant, tant des boucles de ceinture de sécurité que de la banquette proprement dite sur le plancher du véhicule, en position de service et aussi en position repliée de rangement vers l'avant.

A cet effet, l'invention a pour objet un dispositif d'arrimage démontable d'une banquette arrière de véhicule automobile et comprenant un dossier monté articulé sur une assise qui est elle-même montée pivotante sur le plancher du véhicule et qui comporte une armature équipée au voisinage de sa partie arrière d'une barre ou analogue qui s'étend sensiblement parallèlement à cette partie arrière et qui porte, de part et d'autres de sa partie centrale, des boucles de ceinture de sécurité, caractérisé en ce que, sur la partie centrale de la barre, est montée au moins une tringle ou analogue comportant une extrémité libre qui se verrouille automatiquement sur le plancher du véhicule lors de la mise en service de la banquette et qui coopère avec un système de verrouillage s'étendant sous l'assise, lors de la mise en position repliée vers l'avant et de rangement de la banquette.

On comprend donc déjà que la barre précitée constitue en quelque sorte un renfort d'assise de banquette, apte à la fixation d'éléments de ceintures de sécurité et dont la partie centrale est équipée de moyens d'arrimage automatique de la banquette sur le plancher du véhicule.

Suivant un mode de réalisation préféré, les deux extrémités de la barre, solidaires de l'armature de l'assise, portent chacune au moins une boucle de ceinture de sécurité, tandis que sur la partie centrale de la barre elle aussi solidaire de l'armature de l'assise, est monté pivotant un manchon ou analogue solidaire de la tringle et portant un ressort sollicitant constamment ladite tringle vers l'arrière de l'assise.

On précisera ici que l'amplitude du mouvement de la tringle sollicitée par le ressort précité est limitée par une butée solidaire de l'armature de l'assise.

Suivant un autre mode de réalisation, l'extrémité libre de la tringle opposée à celle solidaire du manchon précité est munie d'une boucle éventuellement réglable par rapport à la tringle et susceptible de coopérer avec un verrou solidaire du plancher du véhicule. Ce verrou se compose d'un crochet fixe et d'une rampe mobile constamment sollicitée vers le crochet par un ressort.

Le système de verrouillage comprend, selon un mode de réalisation, un fourreau ouvert à ses deux extrémités dont l'une reçoit un premier doigt sollicité par un premier ressort et susceptible de se verrouiller dans le plancher du véhicule, et dont l'autre reçoit un deuxième doigt en forme de rampe sollicité par un deuxième ressort et coopérant en appui avec la boucle de la tringle précitée.

On précisera ici que la course du deuxième doigt dans le fourreau est limitée par une goupille traversant une lumière.

Suivant encore un autre mode de réalisation, le système de verrouillage précité, la tringle précitée et le verrou précité sont situés sensiblement dans l'axe longitudinal médian du véhicule.

Mais d'autres caractéristiques et avantages de l'invention apparaîtront mieux dans la description détaillée qui suit et se réfère aux dessins annexés donnés uniquement à titre d'exemple, et dans lesquels :
- la figure 1 est une vue en élévation de la partie arrière d'une banquette de véhicule automobile équipée d'un dispositif d'arrimage conforme à l'invention ;
- la figure 2 est une vue en coupe de la banquette suivant la ligne II-II de la figure 1 et illustre en traits pleins la banquette en position de service et en traits mixtes la banquette en position repliée et de rangement vers l'avant du véhicule pour dégager le coffre ; et
- la figure 3 est une vue à plus grande échelle et en coupe axiale du système de verrouillage de l'assise en position repliée de la banquette.

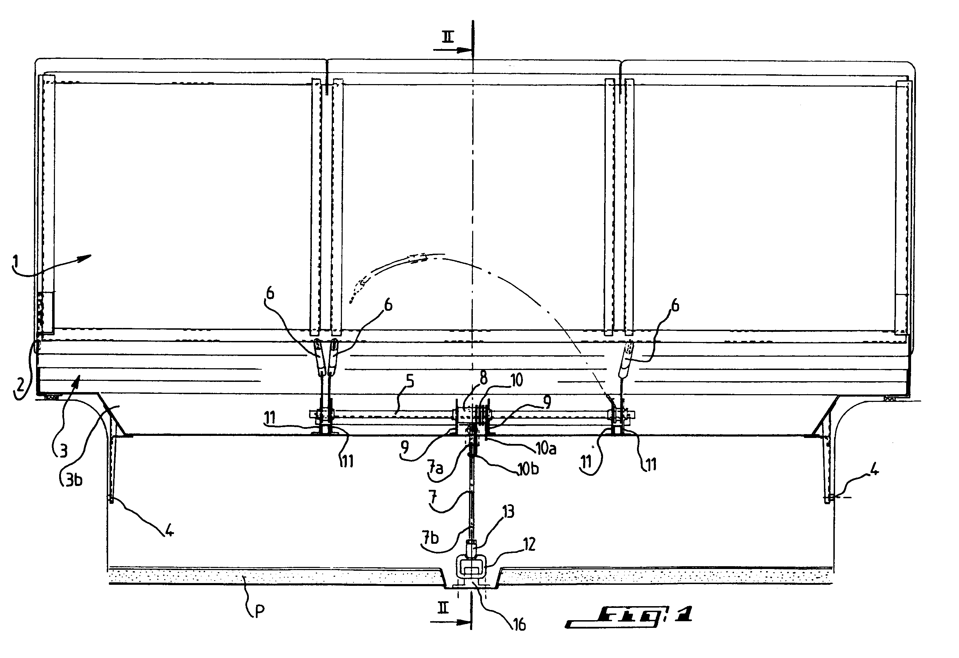

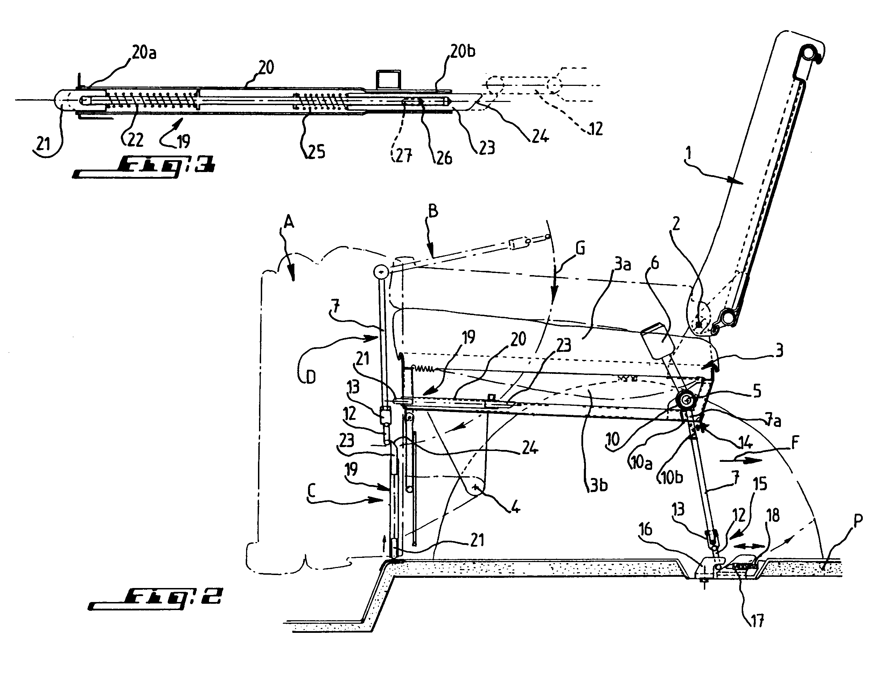

En se reportant plus particulièrement aux figures 1 et 2, on voit une banquette arrière à trois places pour véhicule automobile et comprenant essentiellement un dossier 1 monté articulé en 2 sur une assise 3 elle-même montée pivotante en 4 sur par exemple les passages de roues arrière du véhicule.

L'assise 3 se compose comme connu en soi, et comme on le voit mieux sur la figure 2, d'un coussin 3a qui repose sur une armature métallique 3b formant sommier pour le coussin 3a.

Conformément à l'invention, l'armature 3b de l'assise 3 est équipée, au voisinage de sa partie arrière, d'une barre 5 qui s'étend sensiblement parallèlement à cette partie arrière sur une longueur correspondant sensiblement à la partie d'assise constituant la place milieu de la banquette à trois places.

Aux extrémités de la barre 5 sont ancrés des éléments ou boucles de ceinture de sécurité 6, tandis que sur la partie centrale de la barre 5 comme on le voit bien sur la figure 1, est ancrée une tringle ou analogue 7 qui permet le verrouillage automatique de la banquette sur le plancher du véhicule comme on le décrira plus loin à propos du fonctionnement.

L'une 7a des extrémités de la tringle 7 porte un manchon 8 monté pivotant sur la barre 5 à la manière d'un tourillon.

La barre 5 en sa partie centrale, est fixée sur l'armature 3b de l'assise 3 par des goussets 9 entre lesquels est interposé le manchon 8 de la tringle 7, lequel manchon porte un ressort 10 dont les extrémités 10a, 10b coopèrent respectivement avec l'armature 3b de l'assise 3 et la tringle 7 de façon à solliciter constamment cette tringle vers l'arrière de la banquette. Les boucles ou éléments de ceinture de sécurité 6 sont, comme on le voit bien sur la figure 1, reliés à la barre d'ancrage 5, et cela entre une paire de goussets 11 traversés par ladite barre et permettant sa fixation sur l'armature 3b de l'assise 3 de la banquette.

L'autre extrémité 7b de la tringle 7 est munie d'une boucle 12 et d'un système de réglage en hauteur 13 interposé entre la boucle 12 et l'extrémité 7b de la tringle 7 pour rattraper les tolérances éventuelles.

On a montré en 14 sur la figure 2 une butée solidaire de l'armature 3b de l'assise 3 et qui limite l'amplitude du mouvement de la tringle 7 sollicitée par le ressort 10, lorsque ladite tringle, ou plus précisément la boucle 12 portée par cette tringle, est dégagée d'un verrou 15 fixé sur le plancher P du véhicule.

Ce verrou 15 se compose d'un crochet fixe 16 apte à recevoir la boucle 12 de la tringle 7, et d'une rampe mobile 17 bien visible sur la figure 2 et sollicitée vers le crochet 16 par un ressort 18.

En se reportant aux figures 2 et 3, on voit en 19 un système de verrouillage de l'assise 3 en position repliée et de rangement de la banquette vers l'avant du véhicule de façon à dégager le coffre.

Ce système de verrouillage s'étend longitudinalement sous l'assise dans l'armature 3b, et cela selon l'axe médian de celle-ci.

Comme on le voit bien sur la figure 3, ce système comprend essentiellement un fourreau 20 qui est ouvert à ses deux extrémités 20a et 20b. L'extrémité ouverte 20a qui est dirigée vers l'avant du véhicule lorsque la banquette est en position dépliée de service, reçoit un premier doigt ou poussoir 21 sollicité par un ressort 22 et susceptible de se verrouiller dans le plancher P du véhicule, comme on le décrira en détail plus loin.

L'autre extrémité ouverte 20b du fourreau 20, qui est aplatie, reçoit un deuxième doigt 23 en forme de rampe 24, sollicité par un ressort 25 et susceptible de coopérer avec la boucle 12 portée par la tringle 7 pour assurer le verrouillage de la banquette repliée en position de rangement et donc de dégagement du coffre du véhicule.

La course de débattement du deuxième doigt 23 dans le fourreau 20 est limitée par une goupille 26 traversant une lumière 27, comme on le voit sur la figure 3.

On expliquera maintenant comment s'effectue la mise en service et la mise hors service de la banquette comportant les moyens d'arrimage selon l'invention et qui ont été décrits plus haut, cela en se reportant plus particulièrement à la figure 2.

On partira de la position de service visible en traits pleins sur cette figure 2.

Pour pouvoir rabattre le dossier 1, on tire la tringle ou le levier 7 vers l'arrière, suivant la flèche F, afin de dégager la boucle 12 du crochet 16. Plus précisément, la boucle 12, lors de la traction vers l'arrière du levier 7 provoque l'escamotage de la rampe mobile 17 qui, après dégagement de la boucle 12 du crochet 16, reprend sa place vis-à-vis dudit crochet grâce au ressort 18. Lorsque l'assise 3 est rabattue avec le dossier 1 vers l'avant du véhicule, comme on le voit en A, la tringle ou levier 7 sollicité par le ressort 10 et prenant par conséquent appui sur la butée 14, se trouve dans la position repérée en B sur la figure 2, tandis que le système de verrouillage 19 se trouve dans la position C, c'est-à-dire dans une position perpendiculaire au plancher P du véhicule. Dans cette position, le poussoir 21 est engagé dans un logement (non représenté) pratiqué dans le plancher P. Le levier 7 est ensuite rabattu suivant la flèche G pour prendre la position visible en D sur la figure 2, position dans laquelle la boucle 12 a franchi, par sa rampe 24, le doigt 23 du système de verrouillage 19, ladite boucle passant ainsi derrière le doigt 23, comme on le voit bien sur la figure 2.

Pour faire exécuter à la banquette le mouvement inverse de celui décrit ci-dessus, c'est-à-dire pour remettre en service la banquette, le doigt 21 libéré de son logement dans le plancher P permet aux ressorts 22, 25 contenus dans le fourreau 20 d'escamoter le doigt 23, de sorte que la boucle 12 associée au levier 7 est libérée. Dès lors, le levier 7 rappelé par le ressort 10, se remet automatiquement dans la position B, c'est-à-dire en appui sur la butée 14. Puis, en remettant l'assise 3 dans sa position horizontale, la boucle 12 de la tringle 7 viendra automatiquement se positionner dans le verrou 15, c'est-à-dire plus précisément dans le crochet 16 après avoir repoussé la rampe 17 qui, comme on le comprend a tendance à pousser la boucle 12 vers le crochet 16, de sorte que ladite boucle sera arrimée automatiquement sous le crochet.

Il est à noter ici que le système de verrouillage 19 est en position inactive lorsque la banquette est en position de service. En outre, comme on le comprend, après avoir verrouillé l'assise 3 comme décrit précédemment, il suffit de mettre en service le dossier 1 en le faisant pivoter autour du point d'articulation 2.

On a donc réalisé suivant l'invention un système d'arrimage automatique d'une banquette arrière de véhicule, lequel système utilise un élément simple et peu coûteux tel qu'une barre fixée à l'assise de la banquette et susceptible de reprendre efficacement les efforts auxquels sont soumises les ceintures de sécurité et la banquette elle-même après arrimage.

On remarquera ici que le système de verrouillage 19, la tringle ou levier 7 d'arrimage de la banquette, et le verrou 15 fixé sur le plancher P du véhicule sont situés sensiblement dans l'axe longitudinal médian du véhicule, si bien que le levier 7 ne fractionne l'espace de rangement du véhicule qu'en deux parties, ce qui facilite considérablement les opérations de chargement du véhicule.

Bien entendu, l'invention n'est nullement limitée au mode de réalisation décrit et illustré qui n'a été donné qu'à titre d'exemple.

## Revendications

1. Dispositif d'arrimage démontable d'une banquette arrière de véhicule automobile comprenant un dossier (1) monté articulé sur une assise (3) qui est elle-même montée pivotante sur la caisse du véhicule et qui comporte une armature (3b) équipée au voisinage de sa partie arrière d'une barre ou analogue (5) qui s'étend sensiblement parallèlement à cette partie arrière et qui porte de part et d'autre de sa partie centrale, des boucles (6) de ceinture de sécurité, caractérisé en ce que sur la partie centrale de la barre (5) est montée au moins une tringle ou analogue (7) comportant une extrémité libre (7b) qui se verrouille automatiquement sur le plancher (P) du véhicule lors de la mise en service de la banquette et qui coopère avec un système de verrouillage (19) s'étendant sous l'assise (3) dans son armature (3b) lors de la mise en position repliée vers l'avant et de rangement de la banquette.

2. Dispositif selon la revendication 1, caractérisé en ce que les deux extrémités de la barre (5), solidaires de l'armature de l'assise (3), portent chacune au moins une boucle (6) de ceinture de sécurité, tandis que sur la partie centrale de la barre, elle aussi solidaire de l'armature de l'assise (3), est monté pivotant un manchon ou analogue (8) solidaire de la tringle (7) et portant un ressort (10) sollicitant constamment ladite tringle vers l'arrière de l'assise (3).

3. Dispositif selon la revendication 1 ou 2, caractérisé en ce que l'amplitude du mouvement de la tringle (7) sollicitée par le ressort précité (10) est limitée par une butée (14) solidaire de l'armature (3b) de l'assise (3).

4. Dispositif selon l'une des revendications 1 à 3, caractérisé en ce que l'extrémité libre (7b) de la tringle (7) opposée à celle (7a) solidaire du manchon précité (8) est munie d'une boucle (12) éventuellement réglable par rapport à la tringle et susceptible de coopérer avec un verrou (15) solidaire du plancher (P) du véhicule.

5. Dispositif selon la revendication 4, caractérisé en ce que le verrou précité se compose d'un crochet fixe (16) et d'une rampe mobile (17) constamment sollicitée vers le crochet par un ressort.

6. Dispositif selon l'une des revendications 1 à 4, caractérisé en ce que le système de verrouillage précité (19) comprend un fourreau (20) ouvert à ses deux extrémités dont l'une (20a) reçoit un premier doigt (21) sollicité par un premier ressort (22) et susceptible de se verrouiller dans le plancher (P) du véhicule, et dont l'autre (20b) reçoit un deuxième doigt (23) en forme de rampe (24) sollicité par un deuxième ressort (25) et coopérant en appui avec la boucle (12) de la tringle précitée (7).

7. Dispositif selon la revendication 6, caractérisé en ce que la course du deuxième doigt (23) dans le fourreau (20) est limitée par une goupille (26) traversant une lumière (27).

8. Dispositif selon l'une des revendications précédentes, caractérisé en ce que le système de verrouillage (19), la tringle (7) et le verrou (15) sont situés sensiblement dans l'axe longitudinal médian du véhicule.

## Patentansprüche

1. Vorrichtung zur lösbaren Befestigung einer Rücksitzbank eines Kraftfahrzeugs, mit einer an einem Sitzteil (3) gelenkig angeordneten Rücklehne (1), welcher selbst an dem Kasten des Fahrzeugs schwenkbar angeordnet ist und der im Bereich seines hinteren Teiles mit einer Stange oder dergleichen (5) ausgerüstet ist, die sich etwa parallel zu diesem hinteren Teil erstreckt und die beiderseits ihres mittleren Teiles Sicherheitsgurtschnallen (6) trägt, dadurch gekennzeichnet, dass an dem mittleren Teil der Stange (5) wenigstens ein, ein freies Ende (7b) aufweisender Stab oder dergleichen (7) angeordnet ist, das sich selbsttätig an dem Fussboden (P) des Fahrzeugs bei der Inbetriebsetzung der Bank verriegelt und das mit einem sich unter dem Sitzteil (3) in seiner Randleiste (3b) erstreckenden Verriegelungssystem (19) zusammenwirkt, wenn die Bank in die nach vorne gebrachte Wegräumungstellung gebracht wird.

2. Vorrichtung nach Anspruch 1, dadurch gekennzeichnet, dass die beiden mit der Randleiste des Sitzteiles (3) fest verbundenen Enden der Stange (5) jeweils wenigstens eine Sicherheitsgurtschnalle (6) tragen, während an dem mittleren Teil der Stange, der gleichfalls mit der Randleiste des Sitzteiles (3) fest verbunden ist, eine mit dem Stab (7) fest verbundene und eine den besagten Stab stetig nach hinten des Sitzteiles (3) beaufschlagende Feder (10) tragende Muffe oder dergleichen (8) schwenkbar angeordnet ist.

3. Vorrichtung nach Anspruch 1 oder 2, dadurch gekennzeichnet, dass die Ausschlagsgrösse der Bewegung des durch die vorgenannte Feder (10) beaufschlagten Stabes (7) durch einen mit der Randleiste (3b) des Sitzteiles (3) fest verbundenen Anschlag (14) begrenzt ist.

4. Vorrichtung nach einem der Ansprüche 1 bis 3, dadurch gekennzeichnet, dass das dem mit der vorgenannten Muffe (8) fest verbundenen Ende (7a) entgegengesetzte freie Ende (7b) des Stabes (7) mit einer gegebenenfalls in Bezug auf den Stab einstellbaren Ringschlaufe (12), die fähig ist, mit einem mit dem Fussboden (P) des Fahrzeugs fest verbundenen Riegel (15) zusammenzuwirken, versehen ist.

5. Vorrichtung nach Anspruch 4, dadurch gekennzeichnet, dass der vorgenannte Riegel sich aus einem ortsfesten Hacken (16) und aus einer durch eine Feder stetig zum Hacken hin beaufschlagten bewegbaren Rampe (17) zusammensetzt.

6. Vorrichtung nach einem der Ansprüche 1 bis 4, dadurch gekennzeichnet, dass das vorgenannte Verriegelungssystem (19) eine an ihren beiden Enden offene Hülse (20) umfasst, von denen das eine (20a) einen ersten durch eine erste Feder (22) beaufschlagten und an dem Fussboden (P) des Fahrzeugs verriegelbaren Finger (21) aufnimmt und deren anderes Ende (20b) einen zweiten durch eine zweite Feder (25) beaufschlagten und durch Abstützung mit der Ringschlaufe (12) des vorgenannten Stabes (7) zusammenwirkenden Finger (23) in der Gestalt einer Rampe (24) aufnimmt.

7. Vorrichtung nach Anspruch 6, dadurch gekennzeichnet, dass der Hub des zweiten Fingers (23) in der Hülse (20) durch einen ein Langloch (27) durchsetzenden Steckstift (26) begrenzt wird.

8. Vorrichtung nach einem der vorangehenden Ansprüche, dadurch gekennzeichnet, dass das Verriegelungssystem (19), der Stab (7) un der Riegel (15) etwa entlang der Längsmittelachse des Fahrzeugs liegen.

## Claims

1. Device for the removable securing of a rear bench of an automotive vehicle comprising a back (1) pivotally mounted onto a seating (3) which is itself pivotally mounted onto the body of the vehicle and which comprises a frame (3b) fitted in the vicinity of its rear portion with a bar or the like (5) which extends in substantially parallel relation to that rear portion and which carries on either side of its central portion seat belt buckles (6), characterized in that on the central portion of the bar (5) is mounted at least one rod or the like (7) comprising a free end (7b) which automatically locks itself onto the floor (P) of the vehicle upon the putting in service of the bench and which co-operates with a locking system (19) extending under neath the seating (3) in its frame (3b) upon the putting in the forward folded and tidying position of the bench.

2. Device according to claim 1, characterized in that both ends of the bar (5) which are made fast to the frame of the seating (3) carry each one at least one seat belt buckle (6) whereas on the central portion of the bar itself also made fast to the frame of the seating (3) is pivotally mounted a sleeve or the like (8) made fast to the rod (7) and carrying a spring (10) constantly urging the said rod rearwards of the seating (3).

3. Device according to claim 1 or 2, characterized in that the amplitude of the movement of the rod (7) acted upon by the aforesaid spring (10) is limited by a stop (14) made fast to the frame (3b) of the seating (3).

4. Device according to one of claims 1 to 3, characterized in that that free end (7b) of the rod (7) which is opposite to that (7a) made fast to the aforesaid sleeve (8) is provided with a buckle (12) possibly adjustable with respect to the rod and capable of co-operating with a lock (15) made fast to the floor (P) of the vehicle.

5. Device according to claim 4, characterized in that the aforesaid lock consists of a stationary hook (16) and of a movable ramp (17) constantly urged towards the hook by a spring.

6. Device according to one of claims 1 to 4, characterized in that the aforesaid locking system (19) comprises a casing (20) open at its two ends one (20a) of which receives a first finger (21) biassed by a first spring (22) and capable of locking itself into the floor (P) of the vehicle and the other one (20b) of which receives a second finger (23) in the shape of a ramp (24) biassed by a second spring (25) and co-operating in bearing relationship with the buckle (12) of the aforesaid rod (7).

7. Device according to claim 6, characterized in that the stroke of the second finger (23) in the casing (20) is limited by a pin (26) extending through an elongated opening (27).

8. Device according to one of the foregoing claims, characterized in that the locking system (19), the rod (7) and the lock (15) are located substantially along the longitudinal middle axis of the vehicle.
